# EUROPEAN PATENT SPECIFICATION

(11) **EP 2 243 988 B1**
(45) Date of publication and mention of the grant of the patent: **12.08.2015**
(21) Application number: 09707534.5
(22) Date of filing: 26.01.2009
(51) Int. Cl.: F16J 15/46, B01D 46/00, F01N 3/28

(54) **SEAL DEVICE FOR PRISMATIC BODY**
ABDICHTUNGSVORRICHTUNG FÜR EINEN PRISMAFÖRMIGEN KÖRPER
DISPOSITIF D'ÉTANCHÉITÉ POUR CORPS PRISMATIQUE

(30) Priority: 06.02.2008 JP 2008026123
(43) Date of publication of application: 27.10.2010
(73) Proprietor: NGK Insulators, Ltd., Nagoya-shi, Aichi 467-8530 (JP)
(72) Inventor: ENOMOTO, Akio, Nagoya-shi Aichi 467-8530 (JP)
(74) Representative: Naylor, Matthew John
(86) International application number: PCT/JP2009/051173
(87) International publication number: WO 2009/098958

(56) References cited:
- DE-A1- 3 206 369
- FR-A1- 2 623 756
- JP-A- 61 241 566
- JP-A- 2002 093 770
- JP-A- 2003 158 031
- JP-A- 2003 185 031
- JP-U- 58 065 465

## Description

### TECHNICAL FIELD

The present invention relates to a sealing device for a prismatic body capable of sealing the outer periphery of the prismatic body, and more particularly to a sealing device for a prismatic body suitable for sealing the outer periphery of a honeycomb structure having a rectangular cross section.

### BACKGROUND ART

Ceramic honeycomb structures have been widely used as an exhaust gas filter for collecting and removing particulates or harmful components contained in the exhaust gas of automobiles or the like. This filter has a structure in which a large number of gas passages divided by porous partition walls are alternately closed off at the inlet end face and the outlet end face, so that the exhaust gas introduced into the filter is passed through the porous partition walls to collect particulates or to remove harmful components by decomposition using catalyst carried on the partition walls.

To achieve the above-described function, it is important that the partition walls stay intact inside the honeycomb structure. If there are defective parts in the partition walls, the exhaust gas containing particulates and harmful components will be let out as it is through the defective parts where the flow resistance is low. However, because of the fine pitch between the partition walls and a large dimension in the lengthwise direction, it is not easy to inspect the structure for the presence or absence of defective parts in the partition walls from outside at the manufacturing factory.

Accordingly, the applicants of the present application have previously developed a method in which a honeycomb structure is held perpendicularly and smoke is made to flow therein from the bottom end face thereof, with a laser beam being irradiated parallel to the top end face of the honeycomb structure to detect density of the smoke drifting up from the top end face of the honeycomb structure based on the intensity of reflected laser beam. When conducting this inspection, it is important to cause the smoke to flow only into the honeycomb structure while the other parts are reliably sealed to reliably prevent leakage of the smoke, in order to increase inspection precision.

Accordingly, a sealing device has been used, in which an O-ring having the same diameter as the honeycomb structure to be inspected is attached to an end face where the passages open, after which a metal coupling that is holding the honeycomb structure is tightened to a support body of an inspection device with a bolt or the like so that the honeycomb structure makes pressure contact with the support body of the inspection device through the O-ring. However, this conventional sealing device had the following problems:

Firstly, in this conventional sealing device, the tolerance range is small for dimensional differences between the O-ring and the end face of the honeycomb structure to which it is attached, and also, sometimes a proper seal could not be formed because of product dimensional variations of the honeycomb structure. Secondly, this conventional sealing device could not be adapted to an increase in the inspection speed. Namely, because of the nature of their applications, most ceramic honeycomb structures are locally exposed to a high temperature, and they are typically divided into a plurality of prismatic segments in order to prevent generation of cracks caused by an increase in thermal stress. The number of segments to be inspected has therefore dramatically increased, and setting and removing the honeycomb structures by tightening or removing bolts will not only impose a large burden on operators but also make it impossible to match the speed of the inspection process to that of the production process. Thirdly, as such segments typically have a rectangular cross section, sealing with an O-ring was not easily achieved.

The applicants of the present application have further developed a device for sealing the periphery of a honeycomb structure with an elastic tube and filed a patent application, which has been published as Patent Document 1. The sealing device of this Patent Document 1, which constitutes the closest prior art, uses an elastic tube instead of an O-ring, the elastic tube being inflated with air pressure to make tight contact with the honeycomb structure. However, while this sealing device is applicable to prismatic honeycomb structures, sealing takes time because of the structure in which the long thin elastic tube is inflated around the honeycomb structure to make tight contact therewith, and another problem was remained that when the elastic tube making contact with the honeycomb structure was damaged, it was not easily replaceable.

Patent Document 1: Japanese Published Unexamined Patent Application No. 2003-185031

FR 2 623 756 describes a method for mounting an air-conditioner on a vehicle in which sealing is provided with the aid of an air inlet seal located in a plane which is substantially parallel to the direction of approach of the air-conditioner for being joined onto the vehicle. A tubular seal is used which has been flattened by being evacuated. After mounting the seal is opened to the atmosphere, and resumes its normal shape thereby providing a sealing.

### DISCLOSURE OF THE INVENTION

### PROBLEMS TO BE SOLVED BY THE INVENTION

Accordingly, an object of the present invention is to solve the above-described problems in the conventional techniques and to provide a sealing device for a prismatic body capable of reliably sealing the outer periphery of a prismatic body typically represented by a prismatic honeycomb structure, even if there are product dimensional variations, and capable of providing a seal quickly, and having a simple structure that allows for easy replacement of a damaged elastic tube.

### MEANS FOR SOLVING THE PROBLEMS

The present invention devised to solve the above problems is a sealing device for a prismatic body characterized in that: an elastic tube is disposed on an inner circumference of a frame body, in which a prismatic body, which is an object of sealing, is insertable, the frame body being formed with an air vent that connects to a backside of the elastic tube; and characterized in that there is a vacuum source connected to said air vent, the elastic tube being expandable to increase its inner diameter by being sucked through the air vent toward the frame body; the elastic tube having a shorter inner circumferential length than an outer circumferential length of the prismatic body. In the present invention, as defined in claim 2, it is preferable to provide a structure wherein a pressurized air source is connected to the air vent of the frame body along with the vacuum source.

In the present invention, as defined in claim 3, the frame body preferably includes end plates respectively having an opening therein at both ends in a lengthwise direction thereof, and as defined in claim 4, it is preferable to provide a structure wherein the elastic tube is folded back outwardly at both ends in a lengthwise direction thereof at the both ends of the frame body, the folded-back portions being retained by the end plates. Also, as defined in claim 5, it is preferable to provide a structure wherein an inclined surface is formed at the opening of the end plate for guiding insertion of the prismatic body.

Further, as defined in claim 6, a punched metal sheet is preferably stretched on an inner surface of a recess in the frame body, and as defined in claim 7, the prismatic body, which is the object of sealing, is preferably a ceramic honeycomb structure.

### EFFECTS OF THE INVENTION

The sealing device for a prismatic body of the present invention uses an elastic tube having a shorter inner circumferential length than an outer circumferential length of the prismatic body disposed on an inner circumference of a frame body, the elastic tube being expandable to increase its inner diameter by being sucked through the air vent formed in the frame body toward the frame body. Therefore, with a prismatic body being inserted inside the elastic tube, by releasing the vacuum, the elastic tube restores and makes tight contact with the outer periphery of the prismatic body, thereby sealing the same. With this, a seal is reliably formed even if there are product dimensional variations, and the seal is provided quickly. Moreover, the structure is simple as it uses only a single elastic tube, and the elastic tube is easily replaceable.

With a structure wherein a pressurized air source is connected to the air vent of the frame body along with the vacuum source, as defined in claim 2, the elastic tube can be firmly pressed against the outer periphery of the prismatic body with air pressure, whereby the sealing properties are further enhanced. With the frame body including end plates respectively having an opening therein at both ends in a lengthwise direction thereof as defined in claim 3, and with a structure wherein the elastic tube is folded back outwardly at both ends in a lengthwise direction thereof at the both ends of the frame body, the folded-back portions being retained by the end plates as defined in claim 4, elastic tube replacement work can be easily performed, as it only entails removing the end plates. With a structure wherein an inclined surface is formed at the opening of the end plate for guiding insertion of the prismatic body as defined in claim 5, insertion of the prismatic body is made easy and the operation speed is increased. Further, with a punched metal sheet stretched on an inner surface of a recess in the frame body as defined in claim 6, the elastic tube can be sucked in a wider area, whereby the elastic tube can be expanded more reliably.

### BRIEF DESCRIPTION OF THE DRAWINGS

FIG. 1 is a longitudinal cross-sectional view showing one embodiment of the present invention.
FIG. 2 is a conceptual plan view of a frame body.
FIG. 3 is an enlarged cross-sectional view of essential parts in a non-sealed state.
FIG. 4 is an enlarged cross-sectional view of essential parts in a sealed state.
FIG. 5 is a cross-sectional view showing one example in which the sealing device of the present invention is applied for inspection of partition walls of a prismatic honeycomb structure.
FIG. 6 is an image diagram showing an image of a top end face of a prismatic honeycomb structure.

### DESCRIPTION OF REFERENCE NUMERALS

- W: prismatic body
- 1: frame body
- 2: end plate
- 3: end plate
- 4: opening
- 5: opening
- 6: inclined surface
- 7: inclined surface
- 8: bolt
- 9: base plate
- 10: elastic tube
- 11: folded-back portion
- 12: folded-back portion
- 13: air vent
- 14: recess
- 15: punched metal sheet
- 16: electromagnetic valve
- 17: vacuum source
- 18: pressurized air source
- 19: opening
- 20: metal mesh
- 21: laser beam irradiator
- 22: camera

### BEST MODE FOR CARRYING OUT THE INVENTION

Preferred embodiments of the present invention will be hereinafter described with reference to the drawings.

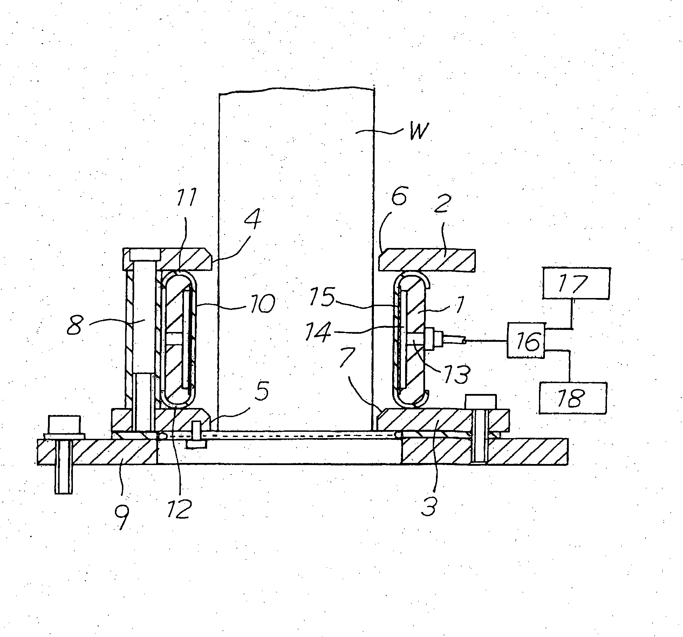

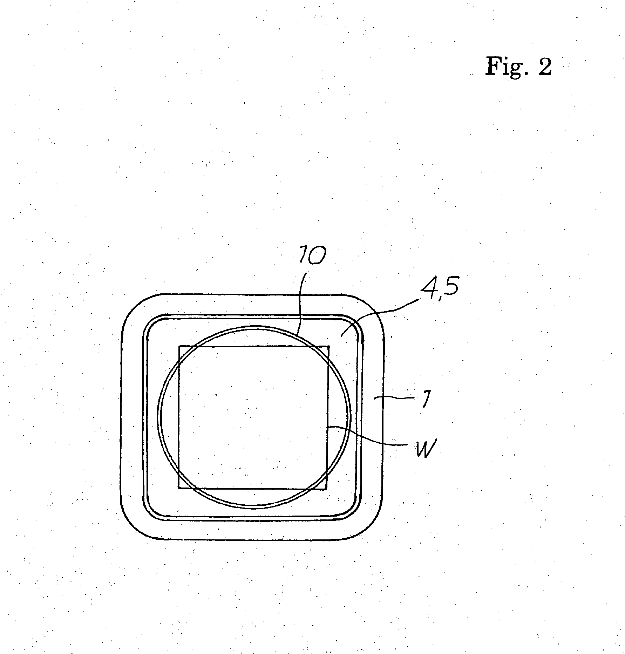

FIG. 1 is a longitudinal cross-sectional view showing one embodiment of the present invention, and FIG. 2 is a plan view of the same. In these drawings, reference numeral W denotes a prismatic body that is the object of sealing, which, in this embodiment, is a segment of a ceramic honeycomb structure. As mentioned above, this honeycomb structure has a large number of gas passages divided by porous partition walls, the passages being closed off alternately at their inlet end face and outlet end face.

Reference numeral 1 denotes a prismatic frame body having such a size that a prismatic body W that is the object of sealing can be inserted therein. In this embodiment, the frame body is substantially square in plan view. End plates 2 and 3 are disposed on the top and bottom of this frame body 1, respectively. These end plates 2 and 3 are flat plates having openings 4 and 5 through which the prismatic body W can be inserted, and as shown in FIG. 1, the inner circumferences of the openings are inclined surfaces 6 and 7 for guiding insertion of the prismatic body W. These end plates 2 and 3 are united with the frame body 1 with a bolt 8 and attached on a base plate 9.

An elastic tube 10 is disposed on the inner circumference of the frame body 1. This elastic tube 10 is thin, having a thickness of, for example, about 1 mm, and has an inner circumferential length shorter than the outer circumferential length of the prismatic body W, in a state in which no external force is applied thereto, as shown in FIG. 2. To give a specific example, if the prismatic body W is 37 mm x 37 mm with an outer circumferential length of 148 mm, the elastic tube 10 may be cylindrical with an inside diameter of 44 mm so that its inner diameter is about 138 mm, which satisfies the above requirement. The openings of the end plates 2 and 3 and the inner feature of the frame body 1 are set to such dimensions that there is a sufficient dimensional difference so that the product inserted therein does not contact the elastic tube 10 being sucked and expanded toward the inner surface of the frame body.

As shown in FIG. 1, FIG. 3, and FIG. 4, both ends in the lengthwise direction of the elastic tube 10 are folded back outwardly at both upper and lower ends of the frame body 1, and the folded-back portions 11 and 12 are held and retained by the end plates 2 and 3. This binding can be released by loosening the bolt 8 and disassembling the end plates 2 and 3 from the frame body 1, and therefore the elastic tube 10 is easily replaceable.

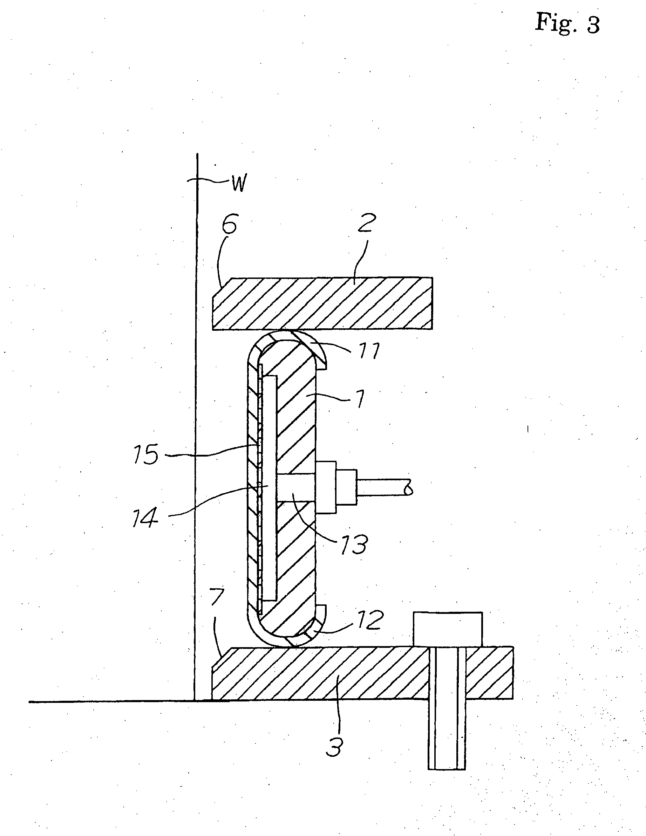

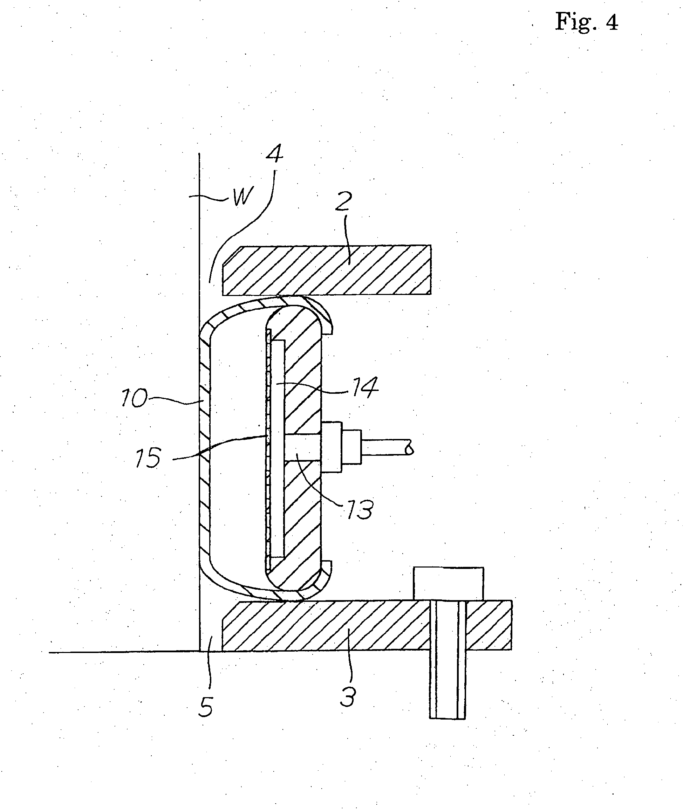

As shown in FIG. 3 and FIG. 4 to a larger scale, the frame body 1 is formed with an air vent 13 that connects to the backside of the elastic tube 10. In this embodiment, a recess 14 is formed in the inner circumferential surface of the frame body 1, with a punched metal sheet 15 stretched on the inner surface of the recess. The air vent 13 communicates with this recess 14. As shown in FIG. 1, a vacuum source 17 is connected to this air vent 13 through an electromagnetic valve 16, so that air is sucked from the backside of the elastic tube 10 through the recess 14 and punched metal sheet 15. Thereby the elastic tube 10 is sucked toward the frame body 1 and takes on the form shown in FIG. 1, FIG. 3, and FIG. 4. With the use of the punched metal sheet 15, the elastic tube 10 can be sucked toward the frame body 1 in a wider area.

The prismatic body W is inserted into the frame body 1 with the inside diameter of the elastic tube 10 being expanded as described above. As mentioned above, the opening dimensions of the end plates 2 and 3 and the inner dimensions of the elastic tube 10 being sucked and expanded toward the inner surface of the frame body are set such that there is a sufficient dimensional difference so that the product inserted therein does not contact the elastic tube 10. Therefore it is unlikely that the elastic tube 10 is damaged by the prismatic body W inserted therein.

However, when the vacuum is released by operating the electromagnetic valve 16, the elastic tube 10, which has a shorter inner circumferential length than the outer circumferential length of the prismatic body W, contracts at once due to its own restoring force, making close contact with the circumferential surface of the prismatic body W and sealing the outer periphery thereof as shown in FIG. 4. Delivering pressurized air from the pressurized air source 18 connected to the air vent 13 to the backside of the elastic tube 10 will cause the elastic tube 10 to make firm contact with the circumferential surface of the prismatic body due to the air pressure, whereby an even more preferable sealing effect can be achieved. Even if there are product dimensional variations in the prismatic body W, it can be reliably sealed.

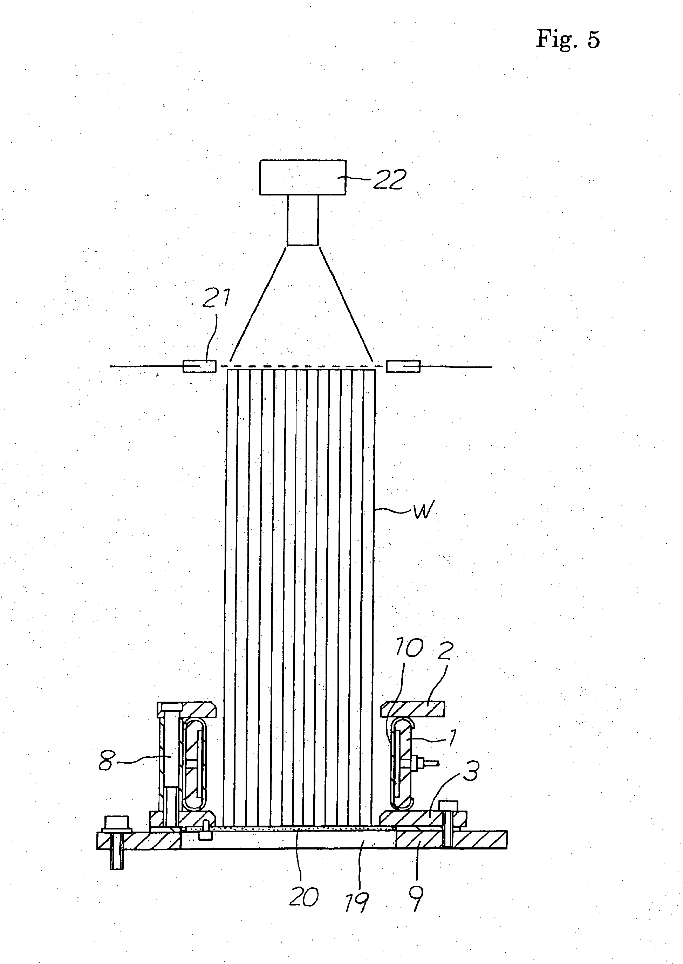

FIG. 5 is a cross-sectional view showing one example in which the sealing device of the present invention is applied for inspection of partition walls of a prismatic honeycomb structure. In this case, the base plate 9 is formed with an opening 19, and a metal mesh 20 is stretched on the upper surface thereof, the honeycomb structure which is a prismatic body W being held perpendicularly on the metal mesh 20. With the outer periphery of a lower part of the honeycomb structure being sealed as described above, smoke is made to flow in from the bottom end face of the honeycomb structure through the metal mesh 20, while a laser beam is irradiated parallel to the top end of the honeycomb structure by means of a laser beam irradiator 21 disposed at the top end of the honeycomb structure.

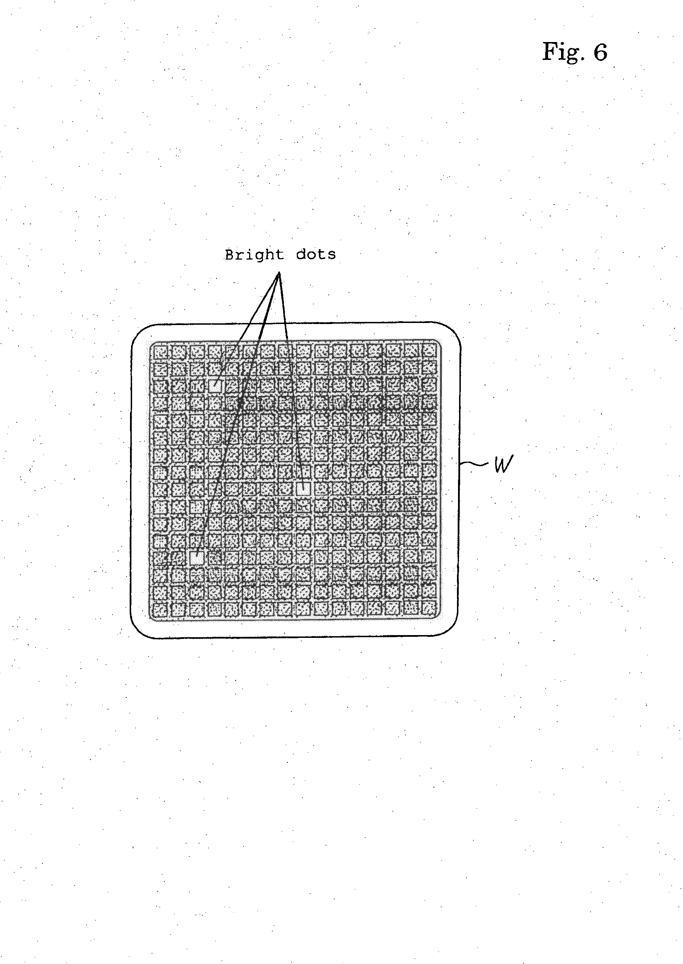

The intensity of reflected laser beam changes in accordance with the density of smoke drifting up from the top end face of the honeycomb structure, and thus taking an image of the smoke by a camera 22 installed thereabove will produce an image shown in FIG. 6, for example. Bright dots in FIG. 6 indicate broken partition walls of the honeycomb structure, and thus inspection for damaged partition walls can be easily accomplished. Further, with the sealing device of the present invention, sealing is achieved instantaneously, and release of the seal is also achieved instantaneously, and therefore a large number of honeycomb structures can be inspected at a high speed. The use of the electromagnetic valve 16, in particular, enables automatic sealing, whereby inspection of honeycomb structures can be carried out without any burden to the operator.

Repeated contact with rigid honeycomb structures may cause damage to the elastic tube 10, but since the end plates 2 and 3 are readily separated from the frame body 1 by loosening the bolt 8, the elastic tube 10 can be removed from the frame body 1 and replaced.

The advantages of the present invention described above are summarized as follows:
(1) Outer periphery of a prismatic body such as a honeycomb structure can be reliably sealed even if there are product dimensional variations;
(2) Sealing and releasing of the seal can be achieved quickly, hence applicable to a high-speed inspection;
(3) Use of a single elastic tube makes the structure simple; and
(4) If the elastic tube is damaged, it can be easily replaced.

## Claims

1. A sealing device for a prismatic body (W), wherein an elastic tube (10) is disposed on an inner circumference of a frame body (1), in which a prismatic body (W), which is an object of sealing, is insertable, the frame body (1) being formed with an air vent (13) that connects to a backside of the elastic tube(10); and
**characterized in that** there is a vacuum source (17) connected to said air vent (13), the elastic tube (10) being expandable to increase its inner diameter by being sucked through the air vent (13) toward the frame body (1); the elastic tube (10) having a shorter inner circumferential length than an outer circumferential length of the prismatic body (W).

2. The sealing device for a prismatic body (W) according to claim 1, wherein a pressurized air source (18) is connected to the air vent (13) of the frame body (1) along with the vacuum source (17).

3. The sealing device for a prismatic body (W) according to claim 1 or 2, wherein the frame body (1) includes end plates (2, 3) respectively having an opening (4, 5) therein at both ends in a lengthwise direction thereof.

4. The sealing device for a prismatic body (W) according to claim 3, wherein the elastic tube (10) is folded back outwardly at both ends in a lengthwise direction thereof at the both ends of the frame body (1), the folded-back portions (11, 12) being retained by the end plates (2, 3).

5. The sealing device for a prismatic body (W) according to claim 3, wherein an inclined surface (6, 7) is formed at the opening (4, 5) of the end plate (2, 3) for guiding insertion of the prismatic body (W).

6. The sealing device for a prismatic body (W) according to any one of claims 1 to 5, wherein a punched metal sheet (15) is stretched on an inner surface of a recess (14) in the frame body (1).

7. The sealing device for a prismatic body (W) according to any one of claims 1 to 6, wherein the prismatic body (W), which is the object of sealing, is a ceramic honeycomb structure.

## Patentansprüche

1. Versiegelungsvorrichtung für einen prismaförmigen Körper (W), worin ein elastisches Rohr (10) auf einem Innenumfang eines Rahmenkörpers (1) angeordnet ist, in das ein prismaförmiger Körper (W), der ein Objekt der Versiegelung ist, einbringbar ist, wobei der Rahmenkörper (1) mit einem Luftkanal (13) ausgebildet ist, der mit einer Rückseite des elastischen Rohrs (10) verbunden ist; und
**dadurch gekennzeichnet, dass** eine Vakuumquelle (17) ausgebildet ist, die mit dem Luftkanal (13) verbunden ist, wobei das elastische Rohr (10) expandierbar ist, um seinen Innendurchmesser zu erhöhen, indem es durch den Luftkanal (13) hin zum Rahmenkörper (1) gesaugt wird;
wobei das elastische Rohr (10) eine kürzere Innenumfangslänge als eine Außenumfangslänge des prismaförmigen Körpers (W) aufweist.

2. Versiegelungsvorrichtung für einen prismaförmigen Körper (W) nach Anspruch 1, worin eine Druckluftquelle (18) mit dem Luftkanal (13) des Rahmenkörpers (1) zusammen mit der Vakuumquelle (17) verbunden ist.

3. Versiegelungsvorrichtung für einen prismaförmigen Körper (W) nach Anspruch 1 oder 2, worin das Rahmenkörper (1) Endplatten (2, 3) umfasst, die jeweils eine Öffnung (4, 5) an beiden Enden in einer Längsrichtung davon aufweisen.

4. Versiegelungsvorrichtung für einen prismaförmigen Körper (W) nach Anspruch 3, worin das elastische Rohr (10) an beiden Enden in einer Längsrichtung davon an beiden Enden des Rahmenkörpers (1) nach außen zurückgefaltet ist, wobei die zurückgefalteten Teile (11, 12) durch die Endplatten zurückgehalten sind.

5. Versiegelungsvorrichtung für einen prismaförmigen Körper (W) nach Anspruch 3, worin eine geneigte Oberfläche (6, 7) an der Öffnung (4, 5) der Endplatte (2, 3) ausgebildet ist, um die Einbringung des prismaförmigen Körpers (W) zu führen.

6. Versiegelungsvorrichtung für einen prismaförmigen Körper (W) nach einem der Ansprüche 1 bis 5, worin ein gelochtes Blech (15) auf einer Innenoberfläche einer Aussparung (14) in dem Rahmenkörper (1) aufgespannt ist.

7. Versiegelungsvorrichtung für einen prismaförmigen Körper (W) nach einem der Ansprüche 1 bis 6, worin der prismaförmige Körper (W), der das Versiegelungssobjekt ist, eine keramische Wabenkonstruktion ist.

## Revendications

1. Dispositif d'étanchéité pour un corps prismatique (W), dans lequel
un tube élastique (10) est disposé sur une circonférence intérieure d'un corps de cadre (1), dans lequel un corps prismatique (W), qui est un objet à enfermer hermétiquement, peut être inséré, le corps de cadre (1) étant formé avec un évent (13) qui est relié à un côté arrière du tube élastique (10) ; et
**caractérisé en ce qu'**il y a une source de vide (17) reliée au dit évent (13), le tube élastique (10) étant expansible de manière à augmenter son diamètre intérieur en étant aspiré à travers l'évent (13) vers le corps de cadre (1) ; le tube élastique (10) ayant une longueur circonférentielle intérieure plus courte qu'une longueur circonférentielle extérieure du corps prismatique (W).

2. Dispositif d'étanchéité pour un corps prismatique (W) selon la revendication 1, dans lequel une source d'air sous pression (18) est reliée à l'évent (13) du corps de cadre (1) ainsi que la source de vide (17).

3. Dispositif d'étanchéité pour un corps prismatique (W) selon la revendication 1 ou 2, dans lequel le corps de cadre (1) comprend des plaques d'extrémité (2, 3) comportant respectivement une ouverture (4, 5) dans celles-ci aux deux extrémités dans une direction de longueur de celles-ci.

4. Dispositif d'étanchéité pour un corps prismatique (W) selon la revendication 3, dans lequel le tube élastique (10) est replié vers l'extérieur aux deux extrémités dans une direction de longueur de celui-ci aux deux extrémités du corps de cadre (1), les parties repliées (11, 12) étant retenues par les plaques d'extrémité (2, 3).

5. Dispositif d'étanchéité pour un corps prismatique (W) selon la revendication 3, dans lequel une surface inclinée (6, 7) est formée au niveau de l'ouverture (4, 5) de la plaque d'extrémité (2, 3) pour guider l'insertion du corps prismatique (W).

6. Dispositif d'étanchéité pour un corps prismatique (W) selon l'une quelconque des revendications 1 à 5, dans lequel une feuille métallique estampée (15) est étirée sur une surface intérieure d'un évidement (14) dans le corps de cadre (1).

7. Dispositif d'étanchéité pour un corps prismatique (W) selon l'une quelconque des revendications 1 à 6, dans lequel le corps prismatique (W), qui est l'objet à enfermer hermétiquement, est une structure en nid d'abeilles en céramique.
